# EUROPÄISCHE PATENTSCHRIFT

(11) **EP 4 527 192 B1**
(45) Veröffentlichungstag und Bekanntmachung des Hinweises auf die Patenterteilung: **21.01.2026**
(21) Anmeldenummer: 24197574.7
(22) Anmeldetag: 30.08.2024
(51) Int. Cl.: A01K 1/015

(54) **VORRICHTUNG UND VERFAHREN ZUM AUFBRINGEN VON STREUMATERIAL BEI DER TIERHALTUNG**
APPARATUS AND METHOD FOR APPLYING LITTER MATERIAL IN ANIMAL HUSBANDRY
DISPOSITIF ET PROCÉDÉ D'APPLICATION DE MATÉRIAU DE LITIÈRE DANS L'ÉLEVAGE D'ANIMAUX

(30) Priorität: 20.09.2023 DE 102023125497
(43) Veröffentlichungstag der Anmeldung: 26.03.2025
(73) Patentinhaber: Högl, Robert, 84088 Neufahrn i. Nb. (DE)
(72) Erfinder: Högl, Robert, 84088 Neufahrn i. Nb. (DE)
(74) Vertreter: Glück Kritzenberger Patentanwälte PartGmbB

(56) Entgegenhaltungen:
- DE-A1- 102018 115 970
- DE-U1- 29 914 165

## Beschreibung

### Technisches Gebiet

Die Erfindung bezieht sich auf eine Vorrichtung sowie ein Verfahren zum Aufbringen von Streumaterial bei der Tierhaltung, insbesondere bei der Nutztierhaltung.

### Stand der Technik

Seit Jahrtausenden dienen Tierställe der Unterbringung von Tieren, insbesondere von Nutztieren wie beispielsweise Pferden, Hühnern, Rindern, Eseln, Schweinen, Hasen, Kamelen, Dromedaren und dergleichen. Um den im Stall gehaltenen Tieren ein gewisses Maß an Komfort zu bieten sowie die Ausscheidungen der Tiere aufzufangen, ist es üblich, den Boden von Ställen mit Einstreu zu bedecken. Bei einigen Nutztierarten, wie beispielsweise Pferden, ist das Einstreuen gesetzlich vorgeschrieben.

Die von den im Stall gehaltenen Tieren ausgeschiedenen Exkremente fallen auf die als Bindemittel wirkende Einstreu. Beim Ausmisten wird der so entstandene Mist in vielen Fällen händisch beseitigt. Ebenso erfolgt das sich an das Ausmisten anschließende Einstreuen von frischem Streumaterial auf den Stallboden häufig von Hand. Diese körperliche Arbeit ist anstrengend und zeitaufwändig. Um das Ausmisten und Einstreuen von Tierställen zu vereinfachen, sind im Stand der Technik verschiedene Lösungsansätze zum automatisierten Betrieb von Ställen bekannt.

Beispielsweise ist aus DE 299 14 165 U1 eine Vorrichtung zur aufstreuartigen Bodenabdeckung eines Stallraumes für Geflügel bekannt. An einem Ende eines Stallraumes ist eine Abwickelstation vorgesehen, auf welcher eine Substratbahn bevorratet ist, die sich entlang der Bodenfläche des Stallraumes erstreckt. Auf der Substratbahn sind Holzpartikel lose aufgestreut. Die Substratbahn ist - während sie von der Abwickelstation abgewickelt wird - mit einer vorbestimmten Geschwindigkeit durch den Stallraum förderbar. Am gegenüberliegenden Ende des Stallraums ist eine Aufwickelstation angeordnet, auf der die Substratbahn nach ihrem Austritt auf dem Stallraum wieder aufwickelbar ist.

In der DE 10 2018 115 970 A1 ist eine Anordnung zum Reinigen eines Tierstalls offenbart, welche eine Auflageeinrichtung aus flexiblem Material aufweist. Die Auflageeinrichtung ist so oberhalb eines Trägers, d.h. eines Stallbodens, angeordnet, dass ein auf der Auflageeinrichtung stehendes Tier durch den Stallboden abgestützt ist. Die Auflageeinrichtung ist gegenüber dem Stallboden bewegbar und es ist eine Aufrolleinrichtung vorgesehen, um wenigstens zeitweise die Auflageeinrichtung aufzurollen.

Beiden vorbekannten Lösungen ist gemein, dass beim Aufrollen der Substratbahn bzw. der Auflageeinrichtung darauf befindlicher Mist abgestreift wird oder herabfällt und anschließend abtransportiert wird. So wird der gesamte, auf der Substratbahn bzw. der Auflageeinrichtung befindliche Mist abtransportiert und muss durch frische Einstreu ersetzt werden. Dies führt zu einem hohen Verbrauch von Einstreu und damit zu hohen Kosten.

Es besteht folglich Bedarf nach einer Vorrichtung und einem Verfahren, die eine zuverlässige, flexible und möglichst kostengünstige Lösung zum Aufbringen von Streumaterial bei der Tierhaltung darstellen.

### Darstellung der Erfindung

Aufgabe der vorliegenden Erfindung ist es daher, eine Vorrichtung und ein Verfahren bereitzustellen, die eine zuverlässige und möglichst kostengünstige Lösung zum Aufbringen von Streumaterial darstellen. Diese Aufgabe wird durch die Vorrichtung zum Aufbringen von Streumaterial nach Anspruch 1 sowie durch das Verfahren zum Aufbringen von Streumaterial nach Anspruch 7 gelöst. Weitere vorteilhafte Aspekte, Details und Ausgestaltungen der Erfindung ergeben sich aus den abhängigen Ansprüchen, der Beschreibung sowie den Zeichnungen.

Die vorliegende Erfindung stellt eine Vorrichtung zum Aufbringen von Streumaterial bei der Tierhaltung gemäß Anspruch 1 zur Verfügung. Die Vorrichtung weist zumindest eine auf einem Stallboden anordenbare Streumaterialauflage zur Aufnahme von Streumaterial auf. Beispielsweise kann rieselfähiges Material wie Einstreu, Hackschnitzel, Holzpartikel oder ähnliches als Streumaterial dienen und auf der Streumaterialauflage angeordnet werden.

Die Vorrichtung weist ferner zumindest einen Antrieb auf, wobei die Streumaterialauflage mittels des zumindest einen Antriebs mit einer Transportgeschwindigkeit im Wesentlichen parallel zum Stallboden entlang einer Transportrichtung bewegbar ist. Im Sinne der Erfindung wird unter einer Bewegung der Streumaterialauflage entlang der Transportrichtung eine Bewegung der Streumaterialauflage in Transportrichtung sowie eine Bewegung der Streumaterialauflage entgegen der Transportrichtung angesehen.

Zur Bewegung entlang der Transportrichtung kann die Vorrichtung einen einzigen Antrieb aufweisen, der beispielsweise als Elektromotor, Hydraulikmotor oder Verbrennungsmotor ausgestaltet sein kann. Damit die Streumaterialauflage sowohl in als auch entgegen der Transportrichtung bewegbar ist, können die Bewegungen des einzigen Antriebs durch eine entsprechende Kraft- und Drehmomentenübertragungsvorrichtung an die Streumaterialauflage übertragen werden. Beispielsweise kann hierfür eine Seilkonstruktion zum Einsatz kommen, welche zwischen dem Antrieb und den Enden der Streumaterialauflage bereitgestellt ist und die Bewegungen des Antriebs an die Enden der Streumaterialauflage weiterleitet. Beispielsweise kann, abhängig von der Bewegungsrichtung, am entsprechenden Ende der Streumaterialauflage gezogen werden. Als besonders vorteilhaft hat es sich herausgestellt, an einer Stallwandung eine Kabeltrommel anzubringen, durch die z.B. ein Stahlseil aufgewickelt werden kann. Eine solche Kabeltrommel kann in einfacher Weise mit einem Elektromotor ausgestatten werden.

Die Vorrichtung kann jedoch auch eine Mehrzahl von Antrieben aufweisen, welche beispielsweise als Elektromotor, Hydraulikmotor oder Verbrennungsmotor ausgebildet sind. Zumindest einer der Antriebe kann eine Bewegung der Streumaterialauflage in Transportrichtung bewirken, wobei zumindest ein anderer Antrieb eine Bewegung der Streumaterialauflage entgegen der Transportrichtung bewirken kann. Die Bewegung der Antriebe kann miteinander gekoppelt sein. Die Antriebe können jedoch auch unabhängig voneinander ansteuerbar sein. Die Bewegung der Antriebe kann auch wahlweise miteinander koppelbar bzw. entkoppelbar sein, beispielsweise mittels einer entsprechend ausgebildeten Kupplungsvorrichtung.

Die Vorrichtung weist außerdem zumindest eine erste Aufrolleinrichtung auf, wobei die Streumaterialauflage bei einer Bewegung der Streumaterialauflage in Transportrichtung auf der ersten Aufrolleinrichtung aufrollbar ist. Bei einer Bewegung der Streumaterialauflage entgegen der Transportrichtung ist die Streumaterialauflage von der ersten Aufrolleinrichtung abrollbar.

Die Vorrichtung weist zumindest eine Aufbringungseinrichtung auf, welche dazu ausgebildet ist, Streumaterial mit einer variablen Mengenleistung auf die Streumaterialauflage aufzubringen. Die Aufbringungseinrichtung kann sich beispielsweise über eine gesamte Streumaterialauflagenbreite der Streumaterialauflage erstrecken. Die Aufbringungseinrichtung ermöglicht eine genaue Dosierung der zugeführten Menge an Streumaterial. Hierfür kann die Aufbringungseinrichtung beispielsweise in Form einer Zellenradschleuse oder als Förderschnecke ausgebildet sein.

Die Aufbringungseinrichtung kann auch eine Zellenradschleuse in Kombination mit einer Förderschnecke aufweisen. In diesem Fall kann Streumaterial von der Zellenradschleuse in einer vordosierten Menge, insbesondere mit einem vordosierten Volumen an die Förderschnecke bereitgestellt werden. Die Förderschnecke kann das bereitgestellte Fördermaterial über die Streumaterialauflage verteilen.

Die Transportgeschwindigkeit der Streumaterialauflage und die Mengenleistung der Aufbringungseinrichtung sind unabhängig voneinander einstellbar. Der Begriff der Mengenleistung kennzeichnet dabei die pro Zeiteinheit aufgebrachte Menge eines Stoffes. Im vorliegenden Fall wird von der Aufbringungseinrichtung also eine gewisse Menge an Streumaterial pro Zeiteinheit aufgebracht.

Durch die unabhängige Einstellbarkeit der Transportgeschwindigkeit der Streumaterialauflage und der Mengenleistung der Aufbringungseinrichtung stehen einer Anlagensteuerung bzw. einem Anlagenbediener zwei Variablen zur Verfügung, um die Bedeckungshöhe des auf der Streumaterialauflage angeordneten Streumaterials zu beeinflussen. Die bereitgestellte Bedeckungshöhe des Streumaterials auf der Streumaterialauflage kann somit sehr flexibel und schnell angepasst werden. Gleichzeitig wird durch die Unabhängigkeit der Einstellvorgänge eine Redundanz bereitgestellt, die die Ausfallsicherheit und damit die Verfügbarkeit der bereitgestellten Vorrichtung verbessert.

Beim Aufbringen von Streumaterial kann die Streumaterialauflage derart an der Aufbringungseinrichtung vorbeibewegt werden und während des Vorbeibewegens mit Streumaterial versehen werden, dass nach und nach die gesamte Streumaterialauflage mit einer gewünschten Bedeckungshöhe an Streumaterial bedeckt wird. Die Menge des pro Fläche aufgebrachten Streumaterials kann für verschiedene Bereiche der Streumaterialauflage unterschiedlich gewählt werden, sodass die Bedeckungshöhe für jeden Abschnitt der Streumaterialauflage individuell einstellbar ist.

Soll eine größere Bedeckungshöhe erzielt werden, so kann beispielsweise die Mengenleistung der Aufbringungseinrichtung erhöht werden, sodass von der Aufbringungseinrichtung in einer gewissen Zeit ein größere Menge, insbesondere ein größeres Volumen, an Streumaterial bereitgestellt wird. Zusätzlich oder alternativ kann die Transportgeschwindigkeit der Streumaterialauflage reduziert werden, sodass sich die Streumaterialauflage langsamer bewegt. Insgesamt wird so bei konstanter Mengenleistung der Aufbringungseinrichtung pro Flächeneinheit der Streumaterialauflage mehr Streumaterial auf die Streumaterialauflage aufgebracht.

Soll eine niedrigere Bedeckungshöhe erzielt werden, so kann beispielsweise die Mengenleistung der Aufbringungseinrichtung verringert werden, sodass von der Aufbringungseinrichtung in einer gewissen Zeit eine geringere Menge an Streumaterial bereitgestellt wird. Zusätzlich oder alternativ kann die Transportgeschwindigkeit der Streumaterialauflage erhöht werden, sodass sich die Streumaterialauflage schneller bewegt. Insgesamt wird so pro Flächeneinheit der Streumaterialauflage weniger Streumaterial auf die Streumaterialauflage aufgebracht.

Bevorzugt kann die Vorrichtung eine zweite Aufrolleinrichtung aufweisen, wobei die Streumaterialauflage bei einer Bewegung der Streumaterialauflage entgegen der Transportrichtung auf der zweiten Aufrolleinrichtung aufrollbar ist und die Streumaterialauflage bei einer Bewegung der Streumaterialauflage in Transportrichtung von der zweiten Aufrolleinrichtung abrollbar ist.

Dementsprechend können die erste Aufrolleinrichtung und die zweite Aufrolleinrichtung an gegenüberliegenden Enden der Streumaterialauflage angeordnet sein. In einem lediglich zur beispielhaften Erläuterung herangezogenen Ausgangszustand kann die Streumaterialauflage jeweils zum Teil auf der ersten Aufrolleinrichtung und auf der zweiten Aufrolleinrichtung aufgewickelt sein. Bei einer Bewegung der Streumaterialauflage in Transportrichtung wird die Streumaterialauflage von der zweiten Aufrolleinrichtung abgewickelt, gleichzeitig erfolgt ein Aufwickeln der Streumaterialauflage auf der ersten Aufrolleinrichtung. Bei einer Bewegung der Streumaterialauflage entgegen der Transportrichtung erfolgt ein Aufwickeln der Streumaterialauflage auf der zweiten Aufrolleinrichtung, wobei die Streumaterialauflage gleichzeitig von der ersten Aufrolleinrichtung abgewickelt wird.

Es soll nochmals darauf hingewiesen werden, dass gemäß der vorliegenden Erfindung lediglich die Anwesenheit einer einzigen Aufrolleinrichtung zum Aufrollen der Streumaterialauflage erforderlich ist. Bei Anwesenheit nur einer Aufrolleinrichtung zum Aufrollen der Streumaterialauflage kann beispielsweise eine Seilkonstruktion vorgesehen sein, welche zwischen dem Antrieb und einem Ende der Streumaterialauflage bereitgestellt ist und die Bewegungen des Antriebs an dieses Ende der Streumaterialauflage weiterleitet. In diesem Fall wird lediglich eine Zugkraft auf die mit dem Ende der Streumaterialauflage verbundenen Seile ausgeübt und die Streumaterialauflage auf diese Weise über den Untergrund gezogen. Dem Fachmann ist klar, dass in diesem Fall die Seile der Seilkonstruktion aufgewickelt werden können, z.B. durch eine an einer Stallwandung angebrachten Kabeltrommel. In diesem Fall handelt es sich aber nicht um eine Aufrolleinrichtung zum Aufrollen der Streumaterialauflage im Sinne der Erfindung, da lediglich die Seilkonstruktion aufgerollt wird, nicht aber die Streumaterialauflage.

Gemäß einer besonders bevorzugten Ausführungsform ist daher eine zweite Aufrolleinrichtung vorgesehen, wobei bei einer Bewegung der Streumaterialauflage entgegen der Transportrichtung die Streumaterialauflage und/oder ein die zweite Aufrolleinrichtung mit einem Ende der Streumaterialauflage verbindendes Verbindungsmittel auf der zweiten Aufrolleinrichtung aufrollbar ist und bei einer Bewegung der Streumaterialauflage in Transportrichtung die Streumaterialauflage und/oder das die zweite Aufrolleinrichtung mit dem Ende der Streumaterialauflage verbindendes Verbindungsmittel von der zweiten Aufrolleinrichtung abrollbar ist.

Wie bereits vorstehend erwähnt, kann jeder Aufrolleinrichtung ein eigener Antrieb, beispielsweise ein erster Antrieb bzw. ein zweiter Antrieb, zugeordnet sein, was die Flexibilität einer erfindungsgemäßen Vorrichtung verbessert. Alternativ können die erste und die zweite Aufrolleinrichtung von einen gemeinsamen Antrieb angetrieben werden, sodass die Anzahl an erforderlichen Antrieben reduziert wird und die bereitgestellte Vorrichtung kostengünstiger ausgeführt werden kann.

In einer bevorzugten Ausführungsform kann zumindest eine sich im Wesentlichen senkrecht zum Stallboden erstreckende Trennwand vorgesehen sein. Weiter bevorzugt kann die Vorrichtung eine Vielzahl von Trennwänden umfassen, um den im Tierstall zur Verfügung stehenden Raum zu unterteilen. Zueinander benachbarte und voneinander beabstandete Trennwände können beispielsweise Boxen ausbilden, wobei ein oder mehrere Tiere, beispielsweise ein Pferd, in einer solchen Box gehalten werden kann.

Die Trennwände können im Wesentlichen senkrecht zur Transportrichtung ausgerichtet sein und voneinander in Transportrichtung beabstandet sein, sodass die Streumaterialauflage lotrecht zu den Trennwänden bewegbar ist. Die Streumaterialauflagenbreite kann der Länge der Trennwände entsprechen, sodass der Stallboden entlang der gesamten Tiefe einer durch benachbarte Trennwände definierten Box von der Streumaterialauflage überspannt wird.

Die zumindest eine Trennwand kann bevorzugt mittels einer Verfahreinrichtung im Wesentlichen senkrecht zum Stallboden bewegbar sein. Dies ermöglicht es, die zumindest eine Trennwand vor einem Bewegen der Streumaterialauflage in Transportrichtung von der Bodenfläche wegzubewegen. Nach einem Bewegen der Streumaterialauflage entgegen der Transportrichtung kann die zumindest eine Trennwand zur Bodenfläche hinbewegt werden.

Vor und/oder nach dem Bewegen der Streumaterialauflage, d.h. wenn kein Aufbringen von Streumaterial auf die Streumaterialoberfläche erfolgt, können Tiere auf der Streumaterialauflage gehalten werden. Um eine Verletzungsgefahr der Tiere bei Kontakt mit den Trennwänden zu minimieren, kann die zumindest eine Trennwand, wenn kein Aufbringen von Streumaterial erfolgt, bevorzugt in Anlage mit der Streumaterialauflage und/oder in Anlage mit dem auf der Streumaterialauflage befindlichen Streumaterial gebracht werden, d.h. unter einer Unterseite der zumindest einen Trennwand ist kein Spalt ausgebildet.

In einer bevorzugten Ausführungsform kann die Vorrichtung eine Positionsermittlungseinrichtung zur Ermittlung der Position der Streumaterialauflage in Transportrichtung relativ zum Stallboden aufweisen. Die von der Positionsermittlungseinrichtung ermittelte Position der Streumaterialauflage kann beispielsweise an eine Anlagensteuerung kommuniziert werden, sodass basierend auf der ermittelten Position eine Steuerung und/oder Regelung der Position der Streumaterialauflage und/oder der Transportgeschwindigkeit, mit der die Streumaterialauflage entlang der Transportrichtung bewegt wird, erfolgen kann. Auch eine Steuerung und/oder Regelung der Mengenleistung der Aufbringungseinrichtung kann abhängig von der ermittelten Position erfolgen.

Die Positionsermittlungseinrichtung kann beispielsweise im Bereich der ersten und/oder zweiten Aufrolleinrichtung angeordnet sein. Die Positionsermittlungseinrichtung kann beispielsweise als Drehzahlsensor ausgebildet sein, der dazu ausgebildet ist, die Umdrehungen der entsprechenden Aufrolleinrichtung durch Erkennen von Impulsen eines Impulsgebers zu detektieren. Basierend auf den ermittelten Impulsen können, wenn die Bewegung der Streumaterialauflage an die Drehungen der Aufrolleinrichtung gekoppelt ist, Rückschlüsse auf die Position der Streumaterialauflage in Transportrichtung relativ zum Stallboden gezogen werden.

Bevorzugt kann die erste Aufrolleinrichtung und/oder die zweite Aufrolleinrichtung derart ausgebildet sein, dass auf der Streumaterialauflage angeordnete Feststoffe von der Streumaterialauflage abfallen. Beispielsweise können die auf der Streumaterialauflage angeordneten Feststoffe beim Aufrollen der Streumaterialauflage auf der Aufrolleinrichtung von der Streumaterialauflage abfallen. Hierfür kann von der Aufrolleinrichtung beispielsweise eine Umlenkrolle zur Umlenkung der Streumaterialauflage bereitgestellt werden, welche die Streumaterialauflage bei einer Bewegung entlang der Transportrichtung derart führt, dass die nach oben weisende Oberfläche der Streumaterialauflage nach Passieren der Umlenkung nach unten weist und die nach unten weisende Oberfläche der Streumaterialauflage nach oben weist.

Im Sinne der Erfindung wird als Streumaterial das auf die Streumaterialauflage aufgebrachte Material bezeichnet. Ein Teil des Streumaterials kann beispielsweise durch Exkremente von auf dem Streumaterial stehenden Tieren verunreinigt werden. Beispielsweise können im Tierstall gehaltenen Pferde einen Teil des Streumaterials durch Urin und Pferdeäpfel verunreinigen, sodass aus den Exkrementen und einem Teil des als Bindemittels fungierenden Streumaterials Mist entsteht. Die Mischung aus nach wie vor trockenem, grundsätzlich wiederverwendbarem Streumaterial und zusätzlichen Komponenten, beispielsweise dem eben genannten Mist, wird im Folgenden zusammenfassend als Feststoffe bezeichnet.

Alternativ oder zusätzlich kann an der Aufrolleinrichtung eine Abschabvorrichtung, eine Abkratzvorrichtung, eine Leitvorrichtung oder dergleichen vorgesehen sein, die bewirkt, dass auf der Streumaterialauflage befindliche Feststoffe von der Streumaterialauflage derart gelöst werden, dass sie sicher von der Streumaterialauflage herabfallen.

Mit fortschreitender Bewegung der Streumaterialauflage entlang der Transportrichtung wird nach und nach die gesamte Streumaterialauflage auf der ersten oder zweiten Aufrolleinrichtung aufgerollt. Dabei können auf der Streumaterialauflage angeordnete Feststoffe von jenem Abschnitt der Streumaterialauflage abfallen, der gerade aufgerollt wird. Nach und nach wird so die gesamte Streumaterialauflage von auf dieser angeordneten Feststoffen befreit, sodass ein automatisiertes Entmisten der Streumaterialauflage erfolgt.

Die Vorrichtung kann ferner zumindest eine Abfördereinrichtung mit einer Feststoffauflagefläche aufweisen. Die Abfördereinrichtung ist zum Abfördern der von der Streumaterialauflage abgefallenen Feststoffe auf der Feststoffauflagefläche in einer Abförderrichtung ausgebildet. Zu diesem Zweck kann die Abfördereinrichtung beispielsweise aktiv angetrieben sein. Beispielsweise kann die Abfördereinrichtung als Förderband oder Förderkette ausgestaltet sein. Alternativ kann die Abfördereinrichtung als passives Element ohne Antrieb ausgestaltet sein, beispielsweise als Rutsche oder Rinne. Die Feststoffauflagefläche ist bevorzugt ähnlich der Streumaterialauflage ausgestaltet.

Die Vorrichtung weist zumindest eine Saugvorrichtung auf, wobei mittels eines durch die Saugvorrichtung erzeugbaren Luftsogs ein Anteil an Streumaterial von den auf der Streumaterialauflage angeordneten Feststoffen und/oder von den von der Streumaterialauflage abgefallenen Feststoffen abtrennbar ist. Dabei sind unter dem Begriff "von der Streumaterialauflage abgefallenen Feststoffe" von der Streumaterialauflage abfallende Feststoffe, auf der Feststoffauflagefläche angeordnete Feststoffe sowie von der Feststoffauflagefläche abgefallene Feststoffe zu verstehen.

Ein Abtrennen der von der Streumaterialauflage abgefallenen Feststoffe kann dementsprechend unmittelbar während des Abfallens von der Streumaterialauflage und/oder während die Feststoffe auf der Feststoffauflagefläche der Abfördereinrichtung angeordnet sind und/oder während des Herabfallens von der Feststoffauflagefläche erfolgen.

Ein Teil der auf der Streumaterialauflage befindlichen Feststoffe, nämlich der Mist, ist durch tierische Exkremente verunreinigt. Ein weiterer Teil der auf der Streumaterialauflage befindlichen Feststoffe ist jedoch nicht durch Exkremente verunreinigt und liegt nach wie vor als Streumaterial vor. Der nicht verunreinigte Anteil der Feststoffe, d.h. das Streumaterial, ist damit nach wie vor trocken und wiederverwendbar.

Das nicht verunreinigte, trockene Streumaterial weist eine geringere Dichte auf als der Mist, der häufig feucht von Urin und anderen Ausscheidungen ist, verklebt und dadurch schwerer als das trockene Streumaterial ist. Ein Anteil des leichteren trockenen Streumaterials kann von der Saugvorrichtung unter Ausnutzung des Dichteunterschieds abgesaugt werden, sodass mittels der Abfördereinrichtung ein Abtrennen von wiederverwendbarem, recycelfähigem Streumaterial erfolgen kann. Dies erfolgt beispielsweise durch Absaugen eines Anteils des leichteren Streumaterials mittels des von der Saugvorrichtung erzeugten Luftsogs.

Das Bereitstellen einer Saugvorrichtung ist deswegen vorteilhaft, weil mittels des Luftsogs eine besonders zuverlässige Trennung eines Anteils des Streumaterials von den übrigen Feststoffen erfolgen kann. Gleichzeitig ist das Auffangen des abgesaugten Anteils des Streumaterials durch die Saugvorrichtung besonders einfach möglich, weil das trockene Streumaterial gebündelt in die Saugvorrichtung gesogen werden kann und dort gespeichert werden kann. Folglich wird die Menge von wiederverwendbarem Material, die in die Umgebung der Vorrichtung gelangt, beispielsweise im Vergleich zu einem unkontrollierten Ausblasprozess, reduziert. Somit kann die Effizienz des Abtrennens gesteigert werden, wobei gleichzeitig die Verschmutzung der Umgebung der Vorrichtung durch ausgeblasene Feststoffe auf ein Minimum reduziert wird.

Folglich kann mittels der zur Verfügung gestellten Vorrichtung ein Anteil an Streumaterial, insbesondere ein Anteil an wiederverwendbarem, recycelfähigem Streumaterial, aus den auf der Streumaterialauflage befindlichen und/oder den von dieser herabgefallenen Feststoffen, insbesondere von dem herabgefallenen Mist, abgetrennt werden. Es besteht keine Notwendigkeit, das gesamte von der Streumaterialauflage entfernte Streumaterial zu entsorgen, sondern es wird ein wiederverwendbarer Anteil des Streumaterials von den Feststoffen abgetrennt, sodass das so gewonnene Streumaterial erneut auf die Streumaterialauflage aufgebracht werden kann. Folglich wird der Verbrauch an Einstreu auf zuverlässige und kostengünstige Weise reduziert.

Die Intensität des Luftsogs kann dabei derart eingestellt sein, dass ein Anteil des Streumaterials abgesaugt wird, Verunreinigungen wie beispielsweise Mist aber nicht vom Luftsog bewegt werden. Durch Bereitstellen einer Einstellbarkeit der Intensität des Luftsogs kann der Anteil an abgesaugtem Streumaterial verändert werden. Beispielsweise kann der Anteil an abgesaugtem Streumaterial durch Vergrößern der Intensität erhöht werden. Durch Verringern der Intensität kann der Anteil an abgesaugtem Streumaterial gesenkt werden.

Bevorzugt kann die Intensität des durch die Saugvorrichtung erzeugbaren Luftsogs einstellbar sein. Hierfür kann beispielsweise die Drehzahl eines Lüfterrads bzw. Ventilators eines Vakuumerzeugers der Saugvorrichtung einstellbar sein, wobei eine höhere Drehzahl des Lüfterrads zu einer höheren Intensität des Luftsogs und damit zu einer höheren Saugkraft führt. Die Einstellung der Intensität des Luftsogs kann insbesondere abhängig von der Beschaffenheit des Streumaterials und/oder der Beschaffenheit der Feststoffe und/oder abhängig von der Position der Streumaterialauflage sein.

Beispielsweise kann die Beschaffenheit des Streumaterials durch eine kleinste, eine durchschnittliche und/oder eine größte Partikelgröße, durch das Material und/oder das Gewicht der Partikel bestimmt sein, welche gleichzeitig auch die Beschaffenheit der Feststoffe beeinflussen. Die Beschaffenheit der Feststoffe kann beispielsweise ferner durch den Verschmutzungsgrad beeinflusst werden, d.h. den Anteil an Mist im Vergleich zu wiederverwendbarem Streumaterial. So ist beispielsweise bei einem Stall, in dem verhältnismäßig große Nutztiere, beispielsweise Kaltblüter-Pferde, gehalten werden, nach einem vergleichbaren Zeitraum ein stärkerer Verschmutzungsgrad zu erwarten als bei einem Stall, in dem kleinere Nutztiere wie beispielsweise Ponys gehalten werden.

Die Saugvorrichtung kann auch gänzlich abgeschaltet werden bzw. ist vollständig abschaltbar, d.h. die Intensität des erzeugbaren Luftsogs kann auf Null reduziert werden. Dies kann beispielsweise dann umgesetzt werden, wenn die Beschaffenheit des Streumaterials bzw. der Feststoffe eine Wiederverwendung ausschließt, beispielsweise, wenn eine Behandlung der Tiere mit Medikamenten erfolgt, sodass die Ausscheidungen der Tiere das in den Feststoffen enthaltene Streumaterial besonders stark verunreinigen oder unbrauchbar machen. Beispielsweise kann nach einer Behandlung der Tiere mit Entwurmungsmittel auf ein Abtrennen mittels der Saugvorrichtung verzichtet werden und die Saugvorrichtung gänzlich abgeschaltet werden.

Die Einstellung der Intensität des von der Saugvorrichtung erzeugten Luftsogs kann jedoch nicht nur basierend auf der Beschaffenheit des Streumaterials und/oder der Feststoffe erfolgen. Vielmehr kann die Sauvorrichtung auch basierend auf der Position der Streumaterialauflage einen Luftsog mit veränderter Intensität erzeugen, insbesondere wenn die Position der Streumaterialauflage von einer Positionsermittlungseinheit erfasst wird.

Beispielsweise kann für jede Box, die von sich senkrecht zur Transportrichtung erstreckenden Trennwänden abgegrenzt ist, eine individuelle Einstellung der Intensität des Luftsogs und damit des Anteils an aus den Feststoffen abtrennbarem Streumaterial erfolgen. Hierbei kann beispielsweise eine unterschiedliche Belegung der Boxen berücksichtigt werden, die dazu führt, dass die Feststoffe einer Box stärker verschmutzt sind als die Feststoffe einer anderen Box. Beispielsweise kann das in einer Box eines Ponys befindliche Streumaterial weniger stark verschmutzt sein als das in einer Box eines Kaltblüter-Pferds befindliche Streumaterial, sodass in vorteilhafter Weise eine Anpassung der Intensität des Luftsogs erfolgen kann, um in energieeffizienter Weise einen gleichbleibend hohen Grad der Abtrennung von wiederverwendbarem Streumaterial und/oder einen hohen Reinheitsgrad des abgetrennten Streumaterials zu erzielen.

Eine positionsgenaue Anpassbarkeit der Intensität des Luftsogs ermöglicht es außerdem, den Luftsog an die Höhe an Streumaterial in verschiedenen Boxen und die dadurch bereitgestellten unterschiedlichen Mengen an Feststoffen anzupassen. So kann bei einer größeren Einstreuhöhe in einer bestimmten Box eine größere Intensität des Luftsogs eingestellt werden und bei einer niedrigeren Einstreuhöhe kann eine niedrigere Intensität des Luftsogs eingestellt werden.

Die vorliegende Erfindung umfasst außerdem ein Verfahren zum Aufbringen von Streumaterial bei der Tierhaltung unter Verwendung einer Vorrichtung in einer der vorstehend beschriebenen Ausführungsformen.

Das Verfahren weist zumindest die folgenden Schritte auf:
a) Einstellen der Transportgeschwindigkeit der Streumaterialauflage;
b) Einstellen der Mengenleistung der Aufbringungseinrichtung;
c) Bewegen der Streumaterialauflage mittels des zumindest einen Antriebs entlang der Transportrichtung;
d) Aufbringen von Streumaterial auf die Streumaterialauflage mittels der Aufbringungseinrichtung während der Bewegung der Streumaterialauflage.

Dabei werden das Einstellen der Transportgeschwindigkeit der Streumaterialauflage in Schritt a) und das Einstellen der Mengenleistung der Aufbringungseinrichtung in Schritt b) derart unabhängig voneinander vorgenommen, dass Streumaterial in einer vorbestimmten Bedeckungshöhe auf die Streumaterialauflage aufgebracht wird.

Mit der Transportgeschwindigkeit der Streumaterialauflage und der Mengenleistung der Aufbringungseinrichtung kann an zwei Stellschrauben gedreht werden, um die Bedeckungshöhe des auf der Streumaterialauflage angeordneten Streumaterials festzulegen. Die bereitgestellte Bedeckungshöhe des Streumaterials auf der Streumaterialauflage kann somit flexibel, schnell und mit einer hohen Prozesssicherheit angepasst werden.

Bevorzugt erfolgt in Schritt c) zusätzlich ein Abrollen der Streumaterialauflage mittels der ersten oder der zweiten Aufrolleinrichtung.

Bevorzugt ist zumindest eine Trennwand vorgesehen, wobei die zumindest eine Trennwand vor einem Bewegen der Streumaterialauflage vom Stallboden wegbewegt wird und nach einem Bewegen der Streumaterialauflage zum Stallboden hinbewegt wird. Hierfür kann die zumindest eine Trennwand beispielsweise von einer Verfahreinrichtung senkrecht zum Stallboden bewegt werden, sodass auf der Streumaterialaufalge angeordnetes Streumaterial unter der Trennwand hindurchbewegt werden kann. Weiter bevorzugt wird die zumindest eine Trennwand vor und/oder nach dem Bewegen der Streumaterialauflage derart oberhalb der Streumaterialauflage angeordnet, dass unter einer Unterseite der Trennwand kein Spalt ausgebildet ist. So wird die Verletzungsgefahr für in der Box gehaltene Tiere reduziert.

In einer bevorzugten Ausführungsform ist zumindest eine Positionsermittlungseinrichtung vorgesehen und das Einstellen der Bedeckungshöhe der Streumaterialauflage erfolgt abhängig von der durch die Positionsermittlungseinrichtung ermittelten Position der Streumaterialauflage in Transportrichtung relativ zum Stallboden. Abhängig von der Position der Streumaterialauflage werden also die Mengenleistung der Aufbringungseinrichtung und die Transportgeschwindigkeit der Streumaterialauflage derart angepasst, dass sich die gewünschte Bedeckungshöhe eines Abschnittes der Streumaterialauflage, auf den gerade Streumaterial aufgebracht wird, einstellt.

Bevorzugt können mehrere sich im Wesentlichen senkrecht zum Stallboden erstreckende Trennwände vorgesehen sein, wobei in jedem Abschnitt der Streumaterialauflage, der sich nach dem Bewegen in Schritt c) zwischen zueinander benachbarten Trennwänden befindet, durch die Aufbringungseinrichtung Streumaterial in einer für jeden Abschnitt individuell vorbestimmten Bedeckungshöhe aufgebracht wird. Insbesondere das Überwachen der Position der Streumaterialauflage in Transportrichtung relativ zum Stallboden ermöglicht es, vorherzusagen, wo ein Abschnitt der Streumaterialauflage, auf den gerade Streumaterial aufgebracht wird, in einem Ausgangs- bzw. Endzustand nach dem Bewegen der Streumaterialauflage angeordnet sein wird. Zusammen mit Informationen darüber, wie beispielsweise die von den Trennwänden definierten Boxen ausgestaltet sind, welche Tiere in den Boxen gehalten werden und in welchen Zeitintervallen ein Aufbringen von Streumaterial und/oder eine Reinigung der Streumaterialauflage erfolgt, kann so für jede Box eine optimale Bedeckungshöhe mit Streumaterial ermittelt und aufgebracht werden.

Beispielsweise kann für Boxen, in denen Ponys gehalten werden, aufgrund des geringeren Gewichts der Tiere und aufgrund des geringeren zu erwartenden Verschmutzungsgrades eine geringere Bedeckungshöhe vorgesehen sein als in einer Box eines Kaltblüter-Pferds, das schwerer ist und mehr Ausscheidungen produziert. Das individuelle Anpassen der Bedeckungshöhe der Streumaterialauflage für jede Box ist geeignet, die insgesamt benötigte Menge an Streumaterial zu reduzieren.

Gemäß einer bevorzugten Ausführungsform kann vorgesehen sein, dass mehrere sich im Wesentlichen senkrecht zum Stallboden erstreckende Trennwände vorgesehen sind, wobei in den Abschnitten der Streumaterialauflage, die sich nach dem Bewegen in Schritt c) unterhalb der Trennwände befinden, durch die Aufbringungseinrichtung kein Streumaterial aufgebracht wird. Dadurch wird die zur Bedeckung der Streumaterialauflage erforderliche Menge an Streumaterial reduziert, sodass eine effizientere Nutzung des Streumaterials ermöglicht wird. Der Komfort für auf der Streumaterialauflage gehaltene Tiere bleibt jedoch erhalten.

Weiterbildungen, Vorteile und Anwendungsmöglichkeiten der Erfindung ergeben sich auch aus der nachfolgenden Beschreibung von Ausführungsbeispielen und aus den Figuren.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparates) wie z. B. einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: in schematischer Darstellung eine Ausführungsform einer Vorrichtung zum Aufbringen von Streumaterial in Draufsicht;
- Fig. 2: in schematischer Darstellung eine Ausführungsform einer Vorrichtung zum Aufbringen von Streumaterial beim Reinigen von Streumaterial in Seitenansicht;
- Fig. 3: in schematischer Darstellung eine Ausführungsform einer Vorrichtung zum Aufbringen von Streumaterial beim Aufbringen von Streumaterial in Seitenansicht;
- Fig. 4: ein Flussdiagramm eines Verfahrens zum Reinigen eines Tierstalls;
- Fig. 5: ein Flussdiagram eines Verfahrens zum Aufbringen von Streumaterial.

### Wege zur Ausführung der Erfindung

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Auch ist die Erfindung in den Figuren nur als schematische Ansicht zur Erläuterung der Arbeitsweise dargestellt. Insbesondere dienen die Darstellungen in den Figuren nur der Erläuterung des grundlegenden Prinzips der Erfindung. Aus Gründen der Übersichtlichkeit ist darauf verzichtet worden, alle Bestandteile der Vorrichtung zu zeigen.

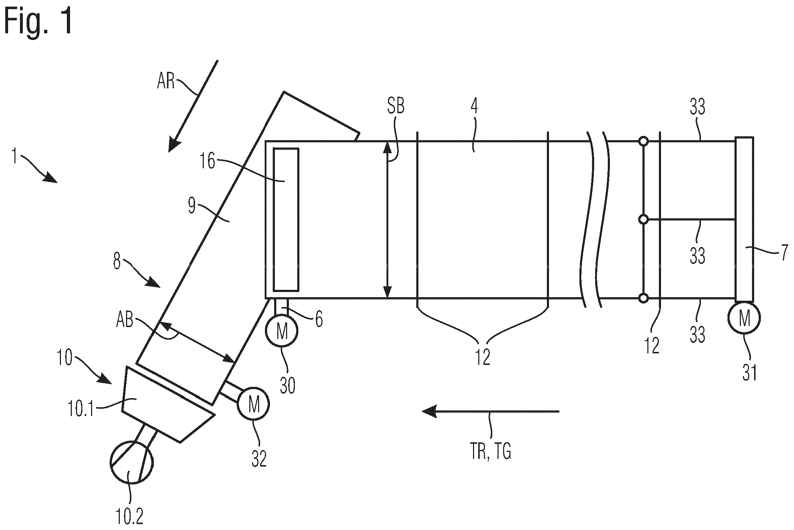

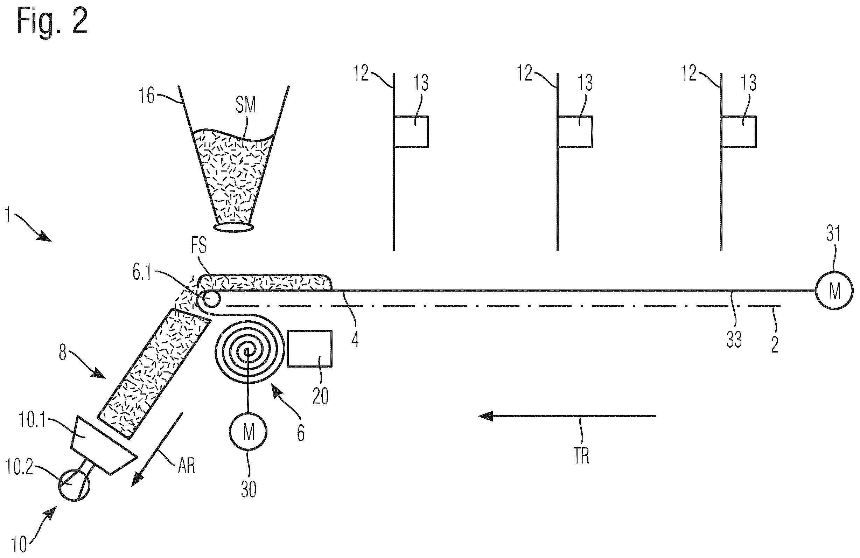

In Figur 1 ist eine Vorrichtung 1 zum Aufbringen von Streumaterial SM gezeigt. Die Vorrichtung 1 weist eine Streumaterialauflage 4 auf, welche dazu geeignet und ausgebildet ist, unmittelbar oberhalb eines Stallbodens 2 (in Figur 2 schematisch dargestellt) des Tierstalls angeordnet zu werden. In einer beispielhaften Ausführungsform können einige oder alle der übrigen Komponenten der Vorrichtung 1 im Stallboden 2 versenkt sein, insbesondere die später noch näher beschriebenen Aufrolleinrichtungen 6, 7. Hierfür kann der Stallboden 2 Ausnehmungen aufweisen, in denen die Komponenten der Vorrichtung 1 aufgenommen sein können.

Die Streumaterialauflage 4 stellt eine Auflagefläche für Streumaterial SM bereit. Die Streumaterialauflage 4 kann derart oberhalb des Stallbodens 2 angeordnet sein, dass die von Tieren, die auf der Streumaterialauflage 4 aufstehen, hervorgerufene Gewichtskraft zu einem signifikanten Teil durch den Stallboden 2 abgestützt wird und nicht durch die sich beispielsweise elastisch verformende Streumaterialauflage 4 getragen wird. Die Hauptaufgabe der Streumaterialauflage 4 ist es dementsprechend nicht, auf dieser aufstehende Tiere abzustützen, sondern als Auflage für in der Tierhaltung häufig notwendiges Streumaterial SM zu dienen.

Die Streumaterialauflage 4 ist bezüglich der Transportrichtung TR langgestreckt ausgeführt und weist eine Streumaterialauflagenbreite SB auf. Die Streumaterialauflagenbreite SB kann beispielsweise 0,5 bis 10 Meter, insbesondere 1 bis 3 Meter, insbesondere 2 Meter betragen.

An einem ersten Ende der Streumaterialauflage 4 ist eine erste Aufrolleinrichtung 6 angeordnet. Die Streumaterialauflage 4 kann auf der ersten Aufrolleinrichtung 6 aufgewickelt werden, wenn die Streumaterialauflage 4 in Transportrichtung TR bewegt wird. Eine solche Bewegung der Streumaterialauflage 4 in Transportrichtung TR kann beispielsweise durch die Aufrolleinrichtung 6 hervorgerufen werden, indem die Streumaterialauflage 4 an der Aufrolleinrichtung 6 festgelegt ist und die Aufrolleinrichtung 6 derart in Drehung versetzt wird, dass die Streumaterialauflage 4 aufgerollt wird. Hierfür kann ein erster Antrieb 30 vorgesehen sein, beispielsweise ein Elektromotor, der die Aufrolleinrichtung 6 oder eine Komponente der Aufrolleinrichtung 6 in Drehung versetzt. Analog ist an einem zweiten Ende der Streumaterialauflage 4 eine zweite Aufrolleinrichtung 7 angeordnet, die von einem zweiten Antrieb 31 in Drehung versetzbar ist.

Am bezüglich der Transportrichtung TR gegenüberliegenden Ende der Streumaterialauflage 4 ist die Streumaterialauflage 4 mittels Zugseilen 33 an einer zweiten Aufrolleinrichtung 7 befestigt. Bei einer Bewegung der Streumaterialauflage 4 entgegen der Transportrichtung TR ist die Streumaterialauflage 4 bzw. sind die mit der Streumaterialauflage 4 verbundenen Zugseile 33 auf der zweiten Aufrolleinrichtung 7 aufwickelbar. Die Streumaterialauflage 4 könnte bei einer Verlängerung der Streumaterialauflage 4 in Transportrichtung TR auch ohne Verwendung von Zugseilen 33 an der zweiten Aufrolleinrichtung 7 angeordnet sein. Ebenso könnten Zugseile 33 auch zur Anbindung der Streumaterialauflage 4 an der ersten Aufrolleinrichtung 6 Anwendung finden.

Im dargestellten Ausführungsbeispiel ist die Streumaterialauflage 4 sowohl in Transportrichtung TR als auch entgegen der Transportrichtung TR bewegbar. Bei einer Bewegung der Streumaterialauflage 4 in Transportrichtung TR wird diese auf der ersten Aufrolleinrichtung 6 aufgerollt, wobei die Streumaterialauflage 4 gleichzeitig von der zweiten Aufrolleinrichtung 7 abgerollt wird. Bei einer Bewegung der Streumaterialauflage 4 entgegen der Transportrichtung TR wird diese von der ersten Aufrolleinrichtung 6 abgerollt und gleichzeitig auf der zweiten Aufrolleinrichtung 7 aufgerollt.

Zumindest beim Aufrollen der Streumaterialauflage 4 auf die erste Aufrolleinrichtung 6 können auf der Streumaterialauflage 4 angeordnete Feststoffe FS von der Streumaterialauflage 4 abfallen. Um dies zu bewerkstelligen, kann die Aufrolleinrichtung 6 zumindest eine Umlenkeinrichtung 6.1 aufweisen, mittels derer die Streumaterialauflage 4 umgelenkt wird, sodass die Oberseite der Streumaterialauflage 4 nach unten zeigt. Folglich fallen die auf der Oberseite der Streumaterialauflage 4 angeordneten Feststoffe FS von der Streumaterialauflage 4 ab. Aufgrund der Bewegung der Streumaterialauflage 4 in Transportrichtung TR und des damit verbundenen fortwährenden Aufwickelns der Streumaterialauflage 4 auf der ersten Aufrolleinrichtung 6 wird die Streumaterialauflage 4 abschnittweise nach und nach vollständig von Feststoffen FS befreit. Dieser Vorgang ist im Zusammenhang mit Figur 2 näher erläutert.

Lediglich schematisch sind in den Figuren Trennwände 12 dargestellt, die sich im Wesentlichen senkrecht zur Transportrichtung TR erstrecken. Die Trennwände 12 unterteilen den Stallboden 2 des Stalls und damit auch die Streumaterialauflage 4, die in einem Ausgangszustand den Stallboden 2 zumindest teilweise bedeckt, in Parzellen, die besonders in der Pferdehaltung auch als Boxen bezeichnet werden. Die Trennwände 12 erstrecken sich oberhalb der Streumaterialauflage 4, d.h. auf der dem Stallboden 2 abgewandten Seite der Streumaterialauflage 4.

Die Trennwände 12 können in einem Betriebszustand, in dem kein Aufbringen von Streumaterial SM erfolgt, sondern sich die Streumaterialauflage 4 im ausgerollten Zustand unter den Trennwänden 12 erstreckt und zumindest teilweise mit Streumaterial SM bedeckt ist, mit dem Streumaterial SM oder der Streumaterialauflage 4 in Berührung stehen, sodass kein Spalt zwischen einer Unterkante der Trennwände 12 und dem Streumaterial SM bzw. der Streumaterialauflage 4 vorgesehen ist. Die Trennwände 12 sind bevorzugt senkrecht zum Stallboden 2 mittels einer Verfahreinrichtung 13 (siehe Figur 2) verschieblich ausgebildet, d.h. die Trennwände 12 können nach oben und unten bewegt werden. So kann vor bzw. bei einer Verschiebung der Streumaterialauflage 4 in oder entgegen der Transportrichtung TR durch ein Verschieben der Trennwände 12 vom Stallboden 2 weg ein Spalt zwischen der Streumaterialauflage 4 und den Trennwänden 12 hergestellt werden, der ein ungehindertes Bewegen der Streumaterialauflage 4 und des darauf befindlichen Streumaterials SM bzw. der Feststoffe FS entlang der Transportrichtung TR ermöglicht.

Zwar kann eine bereitgestellte Vorrichtung 1 auch im Zusammenspiel mit nicht verschieblichen, von der Streumaterialauflage 4 beabstandeten Trennwänden 12 realisiert werden. Allerdings birgt der zwischen Streumaterialauflage 4 und den Trennwänden 12 vorhandene Spalt ein Verletzungsrisiko für die im Stall gehaltenen Tiere. Durch das Bereitstellen von verschieblichen Trennwänden 12 kann der Spalt zwischen Trennwänden 12 und Streumaterialauflage 4 reduziert bzw. eliminiert werden, wenn kein Aufbringen von Streumaterial SM oder keine Reinigung der Streumaterialauflage 4 erfolgt, sodass auch das Verletzungsrisiko für die sich in den Boxen befindenden Tiere gesenkt wird.

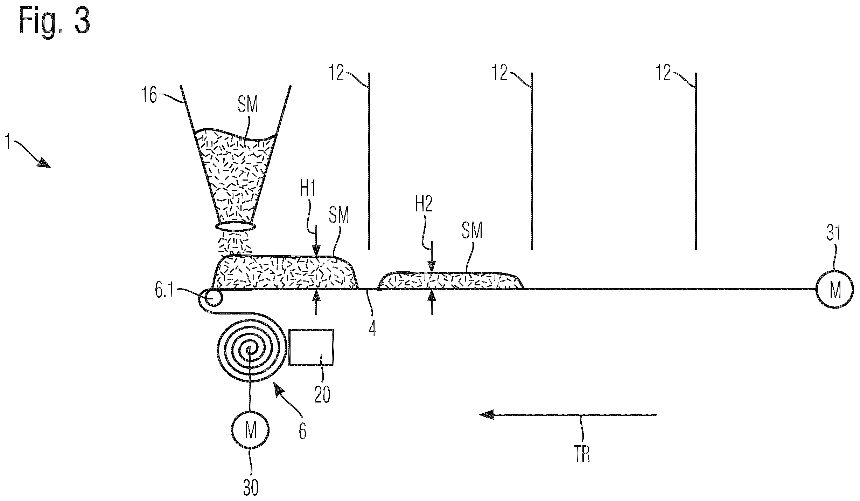

Die Vorrichtung 1 kann eine Aufbringungseinrichtung 16 aufweisen, die dazu ausgebildet ist, Streumaterial SM auf die Streumaterialauflage 4 aufzubringen, insbesondere dann, wenn sich die Streumaterialauflage 4 beispielsweise entgegen der Transportrichtung TR bewegt und von der ersten Aufrolleinrichtung 6 abgerollt wird. Während der Bewegung entgegen der Transportrichtung TR passiert die Streumaterialauflage 4 die Aufbringungseinrichtung 16, sodass aufeinanderfolgende Abschnitte der Streumaterialauflage 4 unter der Aufbringungseinrichtung 16 angeordnet sind und von der Aufbringungseinrichtung 16 mit Streumaterial SM versehen werden. Dieser Vorgang des Aufbringens von Streumaterial SM wird im Zusammenhang mit Figur 3 näher beschrieben. Bevorzugt erstreckt sich die Aufbringungseinrichtung 16 über die gesamte Streumaterialauflagenbreite SB, sodass die gesamte Breite der Streumaterialauflage 4 mit Streumaterial SM beaufschlagbar ist.

Wie in den Figuren 1 und 2 dargestellt, kann die Vorrichtung 1 eine Abfördereinrichtung 8 aufweisen. In Figur 3 ist eine solche aus Gründen der Übersichtlichkeit nicht dargestellt. Die Abfördereinrichtung 8 erstreckt sich im Wesentlichen entlang einer Abförderrichtung AR und ist zum Abtransport der von der Streumaterialauflage 4 herabgefallenen Feststoffe FS in der Abförderrichtung AR ausgebildet. Dabei kommen die von der Streumaterialauflage 4 herabgefallenen Feststoffe FS auf einer Feststoffauflagefläche 9 zum Liegen. Im einfachsten Fall können die Feststoffe FS auf der Feststoffauflagefläche 9 in Abförderrichtung AR gleiten oder rutschen, wobei die Abfördereinrichtung 8 zu diesem Zweck beispielsweise eine Rinne mit einem entsprechenden Gefälle aufweisen kann.

In der dargestellten Ausführungsform ist die Abfördereinrichtung 8 als endlos umlaufend antreibbares, schleifenartig ausgebildetes Förderband ausgebildet, wobei die nach außen weisende Oberfläche des Förderbandes der Feststoffauflagefläche 9 entspricht. Das Förderband erstreckt sich schleifenartig zwischen einer Umlenkrolle und einem dritten Antrieb 32, der eine umlaufende Bewegung des Förderbandes in Abförderrichtung AR bewirken kann.

Wie insbesondere aus Figur 1 ersichtlich ist, weisen die Transportrichtung TR und die Abförderrichtung AR einen von 0° und 90° verschiedenen Winkel zueinander auf, d.h. sie verlaufen schräg zueinander. Zusätzlich können die Streumaterialauflage 4 und die Feststoffauflagefläche 9 der Abfördereinrichtung 8 derart dimensioniert und zueinander angeordnet sein, dass die Streumaterialauflage 4 im Bereich der ersten Aufrolleinrichtung 6 entlang der gesamten Streumaterialauflagenbreite SB oberhalb der Feststoffauflagefläche 9 angeordnet ist. Dies bewirkt, dass die von der Streumaterialauflage 4 herabfallenden Feststoffe FS nicht nur in Abförderrichtung AR, sondern auch senkrecht zur Abförderrichtung AR auf der Feststoffauflagefläche 9 verteilt werden, bevorzugt über die gesamte Breite der Feststoffauflagefläche 9. Dadurch kann der nachfolgend noch näher beschriebene Absaugvorgang effizienter gestaltet werden.

Eine Saugvorrichtung 10 ist zum Abtrennen eines Anteils von Streumaterial SM von den auf der Feststoffauflagefläche 9 angeordneten Feststoffen FS ausgebildet. Hierfür erzeugt die Saugvorrichtung 10 einen Luftsog, durch den Streumaterial SM in die Saugvorrichtung 10 einsaugbar ist. Die Saugvorrichtung 10 weist einen Saugtrichter 10.1 auf. In der dargestellten Ausführungsform ist die Saugvorrichtung 10 am Ende der Abfördereinrichtung 8 angeordnet, an dem die Feststoffe FS von der Abfördereinrichtung 8 herabfallen. Der Saugtrichter 10.1 ist auf die Abfördereinrichtung 8 gerichtet und erstreckt sich entlang der gesamten Abförderbreite AB. Die Abmessungen der Abfördereinrichtung 8 sind nicht wie die Abmessungen der Streumaterialauflage 4, insbesondere wie die Streumaterialauflagenbreite SB, durch den zur Beherbergung von Tieren erforderlichen Raumbedarf vorgegeben. Folglich kann die Abförderbreite AB kleiner als die Streumaterialauflagenbreite SB ausgeführt sein, sodass der Saugtrichter 10.1 bei einer Anordnung im Bereich der Abfördereinrichtung 8 kleiner dimensioniert werden kann. Der Saugluftstrom, d.h. der Luftsog, kann von einem Vakuumerzeuger 10.2 bereitgestellt werden, der mit dem Saugtrichter 10.1 in Fluidverbindung steht. Der Vakuumerzeuger 10.2 kann beispielsweise als Ventilator ausgeführt sein.

Figur 2 stellt eine beispielhafte Ausführungsform der bereitgestellten Vorrichtung 1 während des Reinigens der Streumaterialauflage 4 dar. Der Antrieb 30 ist dazu ausgebildet, die Aufrolleinrichtung 6 anzutreiben. Die Streumaterialauflage 4 ist an der Aufrolleinrichtung 6 festgelegt, sodass sich die Streumaterialauflage 4 bei einer Drehung der Aufrolleinrichtung 6 um die Aufrolleinrichtung 6 aufrollt. Durch die von der Umlenkrolle 6.1 bereitgestellte Umlenkung der Streumaterialauflage 4 wird durch das Aufrollen auf der ersten Aufrolleinrichtung 6 eine Bewegung der Streumaterialauflage 4 in Transportrichtung TR hervorgerufen.

Durch die Umlenkrolle 6.1 wird die Streumaterialauflage 4 derart umgelenkt, dass auf der Streumaterialauflage 4 angeordnete Feststoffe FS von der Streumaterialauflage 4 herabfallen und an die Abfördereinrichtung 8 übergeben werden.

In einem Ausgangszustand, der dem in Figur 2 dargestellten Zustand vorausgegangen sein kann, kann die Streumaterialauflage 4 beispielsweise vollständig mit Streumaterial SM bedeckt sein. Durch die Bewegung der Streumaterialauflage 4 in Transportrichtung TR und das damit verbundene Aufrollen der Streumaterialauflage 4 auf der ersten Aufrolleinrichtung 6 wird der Teil der Streumaterialauflage 4, der sich gerade an der Umlenkrolle 6.1 bzw. der ersten Aufrolleinrichtung 6 befindet, von Feststoffen FS befreit. So wird mit fortschreitender Bewegung der Streumaterialauflage 4 die gesamte Streumaterialauflage 4 von Feststoffen FS gesäubert.

Das Abtrennen von wiederverwendbarem Streumaterial SM von den auf der Abfördereinrichtung 8 transportierten Feststoffen FS erfolgt mittels der Saugvorrichtung 10. Bevorzugt ist die Intensität des von der Saugvorrichtung 10, genauer des von dem Vakuumerzeuger 10.2, erzeugten Luftsogs einstellbar. Beispielsweise kann beim Einstellen der Intensität des Luftsogs die Beschaffenheit des Streumaterials SM und/oder die Beschaffenheit der Feststoffe FS berücksichtigt werden. Zusätzlich oder alternativ kann ein von einer Positionsermittlungseinrichtung 20 bereitgestelltes Positionssignal als Grundlage für das Einstellen der Intensität des Luftsogs dienen. Beispielsweise kann die Intensität des Luftsogs neu eingestellt werden, wenn Feststoffe FS die Saugvorrichtung 10 passieren, die von einem Bereich der Streumaterialauflage 4 stammen, der im Ausgangszustand einer neuen Box zugeordnet ist. Die Intensität des Luftsogs kann dementsprechend für jede Box individuell eingestellt werden.

In Figur 3 ist eine beispielhafte Ausführungsform der bereitgestellten Vorrichtung 1 während des Aufbringens von Streumaterial SM auf die Streumaterialauflage 4 dargestellt. Hierfür wird die Streumaterialauflage 4 entgegen der Transportrichtung TR bewegt und von der Aufrolleinrichtung 6 abgerollt. Die Streumaterialauflage 4 kann beispielsweise von einem zweiten Antrieb 31, an dem die Streumaterialauflage 4 unmittelbar oder mittels Seilen 33 befestigt ist, entgegen der Transportrichtung TR gezogen werden.

Bei der Bewegung entgegen der Transportrichtung TR passiert der jeweilige von der ersten Aufrolleinrichtung 6 abgerollte Abschnitt der Streumaterialauflage 4 die im Bereich der ersten Aufrolleinrichtung 6 oberhalb der Streumaterialauflage 4 angeordnete Aufbringungseinrichtung 16. In der Aufbringungseinrichtung 16 kann frisches Streumaterial SM bevorratet sein. Zusätzlich oder alternativ dazu kann in der Aufbringungseinrichtung 16 recyceltes Streumaterial SM, d.h. von der Saugvorrichtung 10 abgetrenntes Streumaterial SM, vorgehalten werden.

Während der Bewegung der Streumaterialauflage 4 entgegen der Transportrichtung TR mit einer Transportgeschwindigkeit TG wird nach und nach Streumaterial SM auf die Streumaterialauflage 4 aufgebracht, sodass die Streumaterialauflage 4 grundsätzlich vollständig mit Streumaterial SM bedeckbar ist, wenn sie vollständig entgegen der Transportrichtung TR bewegt wurde.

Um die Vielseitigkeit der bereitgestellten Vorrichtung 1 zu verbessern und den Verbrauch an Streumaterial SM zu reduzieren, kann die Aufbringungseinrichtung 16 dazu ausgebildet sein, Streumaterial SM mit einer variablen Mengenleistung auf die Streumaterialauflage 4 aufzubringen. Hierbei können insbesondere die Mengenleistung sowie die Transportgeschwindigkeit TG der Streumaterialauflage 4 unabhängig voneinander einstellbar sein. Dies ermöglicht es, die auf einer gewissen Fläche der Streumaterialauflage 4 bereitgestellte Menge an Streumaterial SM besonders genau zu dosieren. Der Begriff der Mengenleistung kennzeichnet dabei die pro Zeiteinheit aufgebrachte Menge eines Stoffes. Im vorliegenden Fall wird von der Aufbringungseinrichtung 16 also eine gewisse Menge an Streumaterial SM pro Zeiteinheit aufgebracht. Nach dem Aufbringen ist das Streumaterial SM auf der Streumaterialauflage 4 mit einer gewissen, individuell anpassbaren Bedeckungshöhe H1, H2 angeordnet.

Insbesondere wenn die Vorrichtung 1 eine Positionsermittlungseinrichtung 20 aufweist, wird so eine besonders vielseitige und gleichzeitige ressourcenschonende Lösung zum Aufbringen von Streumaterial SM bereitgestellt. Unter Verwendung der von der Positionsermittlungseinrichtung 20 ermittelten Position kann beispielsweise für jeden Abschnitt der Streumaterialauflage 4, der im Ausgangszustand einer von Trennwänden 12 definierten Box zugeordnet ist, eine individuelle Bedeckungshöhe H1, H2 eingestellt werden.

Im in Figur 3 dargestellten Ausführungsbeispiel weist ein Abschnitt der Streumaterialauflage 4, der im vollständig ausgerollten Zustand der Streumaterialauflage 4 der von der ersten Aufrolleinrichtung 6 am weitesten beabstandeten Box zugeordnet ist, eine Bedeckungshöhe H2 auf. Der in Transportrichtung TR an diesen angrenzende, benachbarte Abschnitt der Streumaterialauflage 4 weist eine größere Bedeckungshöhe H1 auf, beispielsweise weil in der Box mit der Bedeckungshöhe H1 ein größeres Tier gehalten wird als in der Box mit der Bedeckungshöhe H2, das mehr Ausscheidungen verursacht oder ganz allgemein einen höheren Bedarf an Einstreumaterial SM hat.

Somit ist die Bedeckungshöhe H1, H2 ganz individuell für jede Box bzw. jeden Abschnitt der Streumaterialauflage 4 einstellbar. Soll eine größere Bedeckungshöhe H1, H2 erzielt werden, so kann beispielsweise die Mengenleistung der Aufbringungseinrichtung 16 erhöht werden, sodass ein größere Menge an Streumaterial SM pro Zeiteinheit bereitgestellt wird. Zusätzlich oder alternativ kann die Transportgeschwindigkeit TG der Streumaterialauflage 4 reduziert werden, sodass sich die Streumaterialauflage 4 pro Zeiteinheit weniger weit bewegt. In Summe wird so pro Flächeneinheit der Streumaterialauflage 4 mehr Streumaterial SM auf die Streumaterialauflage 4 aufgebracht.

Soll die Bedeckungshöhe H1, H2 reduziert werden, so kann beispielsweise die Mengenleistung der Aufbringungseinrichtung 16 verringert werden, sodass eine kleinere Menge an Streumaterial SM pro Zeiteinheit bereitgestellt wird. Zusätzlich oder alternativ kann die Transportgeschwindigkeit TG der Streumaterialauflage 4 erhöht werden, sodass sich die Streumaterialauflage 4 pro Zeiteinheit weiter bewegt. In Summe wird so pro Flächeneinheit der Streumaterialauflage 4 weniger Streumaterial SM auf die Streumaterialauflage 4 aufgebracht.

Wie ebenfalls aus Figur 3 hervorgeht, ist zwischen dem Abschnitt der Streumaterialauflage 4, auf dem Streumaterial SM mit einer Bedeckungshöhe H1 angeordnet ist, und dem Abschnitt der Streumaterialauflage 4, auf dem Streumaterial SM mit der Bedeckungshöhe H2 angeordnet ist, ein Abschnitt vorgesehen, in dem kein Streumaterial SM oder Streumaterial SM in einer reduzierten Bedeckungshöhe angeordnet ist. Dieser Abschnitt der Streumaterialauflage 4 ohne Streumaterial SM kann, wenn die Streumaterialauflage 4 vollständig von der ersten Aufrolleinrichtung 6 abgerollt ist und/oder der Aufbringungsvorgang abgeschlossen ist, unter einer Trennwand 12 angeordnet sein.

Unter den Trennwänden 12 wird normalerweise kein Streumaterial SM benötigt, da im Stall gehaltene Tiere sich üblicherweise nicht unter den Trennwänden 12 aufhalten, insbesondere wenn kein Spalt zwischen Trennwand 12 und Streumaterialauflage 4 vorhanden ist. Somit kann die Menge des zum Einstreuen notwendigen Streumaterials SM weiter reduziert werden. Falls die Vorrichtung 1 bewegliche Trennwände 12 aufweist, kann die entsprechende Trennwand 12 direkt ohne dazwischen angeordnetes Streumaterial SM mit der Streumaterialauflage 4 in Anlage gebracht werden.

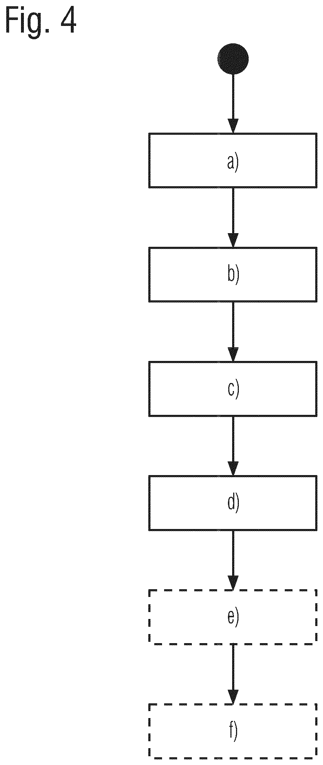

In Figur 4 ist ein Verfahren zur Reinigung eines Tierstalls mithilfe eines Ablaufdiagramms visualisiert. Das Verfahren kann die Schritte a) bis d) aufweisen. Optional können die Schritte e) und f) ausgeführt werden. Die Schritte a) bis d) sowie e) und f) werden dabei nicht zwangsläufig zeitlich aufeinanderfolgend ausgeführt. Vielmehr können einige oder alle der Schritte auch parallel zueinander ausgeführt werden.

In einem Ausgangszustand, bevor das Verfahren zur Reinigung eines Tierstalls durchgeführt wird, kann sich die Streumaterialauflage 4 beispielsweise in einem ausgefahrenen Zustand befinden, in dem eine größtmögliche Überdeckung des Stallbodens 2 durch die Streumaterialauflage 4 erzielt wird.

In Schritt a) wird die Streumaterialauflage 4 mittels des zumindest einen Antriebs 30 in Transportrichtung TR bewegt. Dabei kann ein Aufrollen der Streumaterialauflage 4 mittels der ersten Aufrolleinrichtung 6 erfolgen (Schritt b)). Wie bereits vorstehend ausgeführt, kann die Streumaterialauflage 4 in der ersten Aufrolleinrichtung 6 derart geführt sein, dass auf der Streumaterialauflage 4 angeordnete Feststoffe FS vor, während oder nach dem Aufrollen von der Streumaterialauflage 4 abfallen.

In Schritt c) erfolgt ein Übergeben der von der Streumaterialauflage 4 abfallenden Feststoffe FS an die Feststoffauflagefläche 9 der Abfördereinrichtung 8. Beispielsweise können die Feststoffe FS direkt auf die Feststoffauflagefläche 9 der Abfördereinrichtung 8 fallen. Zusätzlich oder alternativ können verschiedene Elemente zum Weitertransport der Feststoffe FS von der Streumaterialaufalge 4 zu der Feststoffauflagefläche 9 vorgesehen sein, wie beispielsweise Rutschen, Leitbleche, Förderbänder, Förderketten oder andere vergleichbare Vorrichtungen.

In Schritt d) erfolgt ein Abtrennen eines Anteils an Streumaterial SM von den auf der Streumaterialauflage 4 angeordneten Feststoffen FS und/oder von den von der Streumaterialauflage 4 abgefallenen Feststoffen FS mittels des von der Saugvorrichtung 10 erzeugten Luftsogs. Dabei werden auch die auf der Feststoffauflagefläche 9 angeordneten Feststoffe FS sowie die von der Feststoffauflagefläche 9 abgefallenen Feststoffe FS als von der Streumaterialauflage 4 abgefallene Feststoffe FS betrachtet.

Hierfür ist bevorzugt die Intensität des Luftsogs einstellbar, sodass ein effizienteres Abtrennen von Streumaterial SM aus den Feststoffen FS erfolgen kann. Wie oben beschrieben kann das Einstellen der Intensität des Luftsogs dabei beispielswiese basierend auf der Beschaffenheit des Streumaterials SM und/oder der Beschaffenheit der Feststoffe FS und/oder der Position der Streumaterialauflage 4 bezüglich des Stallbodens 2 erfolgen. Durch das Einstellen der Intensität des Luftsogs kann der Anteil bzw. die Menge des von den Feststoffen FS abgetrennten Streumaterials SM eingestellt werden.

In Schritt e) kann ein automatisiertes Rückführen des in der Saugvorrichtung 10 abgetrennten wiederverwendbaren Streumaterials SM zur Aufbringungseinrichtung 16 erfolgen. Hierfür kann beispielsweise eine Rückführeinrichtung bereitgestellt werden, mittels derer das durch die Saugvorrichtung 10 abgetrennte Streumaterial SM unmittelbar in die Aufbringungseinrichtung 16 zugeführt wird.

In der Aufbringungseinrichtung 16 bzw. mittels der Aufbringungseinrichtung 16 kann ein Vermischen des rückgeführten Streumaterials SM mit einem bevorrateten frischen Streumaterial SM erfolgen, sodass ein homogenes Streumaterial SM bereitgestellt ist, das beispielsweise mittels der Aufbringungseinrichtung 16 auf die Streumaterialauflage 4 aufgebracht werden kann.

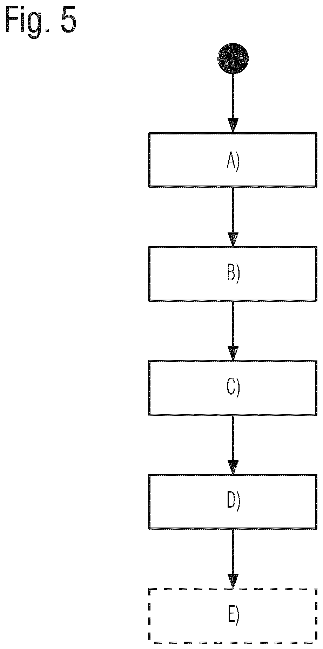

Figur 5 stellt ein Flussdiagram eines Verfahrens zum Aufbringen von Streumaterial SM dar. Das Verfahren kann beispielsweise die folgenden Schritte A) bis D) aufweisen. Die Schritte A) bis D) werden dabei nicht zwangsläufig zeitlich aufeinanderfolgend ausgeführt. Vielmehr können einige oder alle der Schritte auch parallel zueinander ausgeführt werden.

In einem Ausgangszustand, bevor das Verfahren zum Aufbringen von Streumaterial SM durchgeführt wird, kann sich die Streumaterialauflage 4 beispielsweise in einem aufgerollten Zustand befinden, in dem keine Überdeckung des Stallbodens 2 durch die Streumaterialauflage 4 vorliegt.

In Schritt A) erfolgt ein Einstellen der Transportgeschwindigkeit TG der Streumaterialauflage 4. Hierfür kann beispielsweise, das von einem Antrieb 30, 31 bereitgestellte Drehmoment oder die bereitgestellte Drehzahl angepasst werden. Abhängig von der konkreten Ausgestaltung des Antriebs 30, 31 kann dies beispielsweise durch ein Signal einer Anlagensteuerung erfolgen.

In Schritt B erfolgt ein Einstellen der Mengenleistung der Aufbringungseinrichtung 16. Auch dieses Einstellen der Mengenleistung kann beispielsweise durch ein Signal einer Anlagensteuerung hervorgerufen werden. Das Einstellen der Mengenleistung erfolgt unabhängig vom Einstellen der Transportgeschwindigkeit TG, sodass eine beliebige Kombination aus Mengenleistung und Transportgeschwindigkeit TG erzielbar ist.

Vor, während oder nach dem Einstellen der Transportgeschwindigkeit TG und der Mengenleistung erfolgt in Schritt C) ein Bewegen der Streumaterialauflage 4 mittels des zumindest einen Antriebs 30, 31 entlang der Transportrichtung TR und ein Abrollen der Streumaterialauflage 4 mittels der ersten oder der zweiten Aufrolleinrichtung 6, 7. Gleichzeitig kann die Streumaterialauflage 4 oder ein mit der Streumaterialauflage 4 verbundenes Seil 33 auf der anderen Aufrolleinrichtung 7, 6 aufgerollt werden, sodass die Streumaterialauflage 4 während des Bewegens entlang der Transportrichtung TR gespannt ist.

In Schritt D) erfolgt ein Aufbringen von Streumaterial SM auf die Streumaterialauflage 4 mittels der Aufbringungseinrichtung 16 während der Bewegung der Streumaterialauflage 4. Dabei wird durch das unabhängig voneinander vorgenommene Einstellen der Transportgeschwindigkeit TG der Streumaterialauflage 4 und der Mengenleistung der Aufbringungseinrichtung 16 Streumaterial SM in einer vorbestimmten Bedeckungshöhe auf die Streumaterialauflage 4 aufgebracht.

Zum Einstellen der Bedeckungshöhe des Streumaterials SM auf der Streumaterialauflage 4 stehen somit zwei Variablen zur Verfügung, nämlich die Transportgeschwindigkeit TG der Streumaterialauflage 4 und die Mengenleistung der Aufbringungseinrichtung 16, die unabhängig voneinander einstellbar sind, jedoch beide geeignet sind, die Bedeckungshöhe der Streumaterialauflage 4 zu beeinflussen. Die bereitgestellte Bedeckungshöhe des Streumaterials SM kann somit sehr flexibel und schnell angepasst werden. Gleichzeitig wird durch die Unabhängigkeit der Einstellvorgänge eine Redundanz bereitgestellt, die die Ausfallsicherheit und damit die Verfügbarkeit der bereitgestellten Vorrichtung verbessert.

Bevorzugt kann die zumindest eine Trennwand 12 vor und/oder nach dem Bewegen der Streumaterialauflage 4 in Anlage mit der Streumaterialauflage 4 und/oder in Anlage mit dem auf der Streumaterialauflage 4 befindlichen Streumaterial SM gebracht wird, um die Verletzungsgefahr für Tiere, die in der Box gehalten werden, zu reduzieren.

Zur Durchführung des Verfahrens kann jedoch entweder von Beginn an oder nach Bewegen der Trennwände 12 mittels der Verfahreinrichtung 13 ein Spalt zwischen der Unterkante der Trennwände 12 und der Streumaterialauflage 4 vorgesehen sein, sodass das aufgebrachte Streumaterial SM durch eine Bewegung der Streumaterialauflage 4 unter den Trennwänden 12 hindurchgeschoben werden kann.

Weiter bevorzugt kann die zumindest eine Trennwand 12 in einem Schritt E) nach einem Bewegen der Streumaterialauflage 4 zum Stallboden 2 hinbewegt werden, sodass der Spalt zwischen der Unterkante der Trennwand 12 und der Streumaterialauflage 4 bzw. der Oberkante des auf der Streumaterialauflage 4 angeordneten Streumaterials SM geschlossen wird.

Die in den Figuren 4 und 5 dargestellten Verfahren können miteinander kombiniert werden. Beispielsweise kann zunächst zumindest ein Schritt des in Figur 4 dargestellten Verfahrens zum Reinigen eines Tierstalls, insbesondere zur Reinigung der Streumaterialauflage 4, ausgeführt werden und im Anschluss zumindest ein Schritt des in Figur 5 dargestellten Verfahrens zum Aufbringen von Streumaterial SM ausgeführt werden.

Beispielsweise kann ein kombiniertes Verfahren zum Reinigen eines Tierstalls und zum Aufbringen von Streumaterial SM die folgenden Schritte aufweisen, wobei die Streumaterialauflage 4 lediglich beispielhaft zunächst in Transportrichtung TR und anschließend entgegen der Transportrichtung TR bewegt wird:
- Bewegen der Streumaterialauflage 4 mittels des zumindest einen Antriebs 30, 31 in Transportrichtung TR;
- Aufrollen der Streumaterialauflage 4 mittels der ersten Aufrolleinrichtung 6;
- Übergeben der von der Streumaterialauflage 4 abfallenden Feststoffe FS an die Feststoffauflagefläche 9 der Abfördereinrichtung 8;
- Abtrennen eines Anteils an Streumaterial SM von den auf der Streumaterialauflage 4 angeordneten Feststoffen FS und/oder von den von der Streumaterialauflage 4 abgefallenen Feststoffen FS mittels des von der Saugvorrichtung 10 erzeugten Luftsogs;
- Einstellen der Transportgeschwindigkeit TG der Streumaterialauflage 4;
- Einstellen der Mengenleistung der Aufbringungseinrichtung 16;
- Bewegen der Streumaterialauflage 4 mittels des zumindest einen Antriebs 30, 31 entgegen der Transportrichtung TR und Abrollen der Streumaterialauflage 4 mittels der ersten Aufrolleinrichtung 6;
- Aufbringen von Streumaterial SM auf die Streumaterialauflage 4 mittels der Aufbringungseinrichtung 16 während der Bewegung der Streumaterialauflage 4, wobei durch das unabhängig voneinander vorgenommene Einstellen der Transportgeschwindigkeit TG der Streumaterialauflage 4 und der Mengenleistung der Aufbringungseinrichtung 16 Streumaterial SM in einer vorbestimmten Bedeckungshöhe auf die Streumaterialauflage 4 aufgebracht wird.

Falls die Vorrichtung 1 Trennwände 12 aufweist, kann bevorzugt zumindest eine der Trennwände 12 vor einem Bewegen der Streumaterialauflage 4 mittels des zumindest einen Antriebs 30, 31 in Transportrichtung TR von einer Stellung, in der die Trennwand 12 mit der Streumaterialauflage 4 oder dem auf der Streumaterialauflage 4 angeordneten Streumaterial SM in Kontakt ist, in eine Stellung, in der ein Spalt zwischen der Trennwand 12 und dem auf der Streumaterialauflage 4 angeordneten Streumaterial SM bereitgestellt ist, bewegt werden.

Nach dem Bewegen der Streumaterialauflage 4 mittels des zumindest einen Antriebs 30, 31 entgegen der Transportrichtung TR kann bevorzugt zumindest eine der Trennwände 12 von einer Stellung, in der ein Spalt zwischen der Trennwand 12 und dem auf der Streumaterialauflage 4 angeordneten Streumaterial SM bereitgestellt ist, in eine Stellung, in der die Trennwand 12 mit der Streumaterialauflage 4 oder dem auf der Streumaterialauflage 4 angeordneten Streumaterial SM in Kontakt ist, bewegt werden.

Alle Ausführungen, die vorstehend im Zusammenhang mit einer Bewegung der Streumaterialauflage 4 in Transportrichtung TR und einem Aufrollen der Streumaterialauflage 4 auf der ersten Aufrolleinrichtung 6 gemacht wurden, sind bei entsprechender Ausgestaltung der Vorrichtung 1 auch auf eine Bewegung der Streumaterialauflage 4 entgegen der Transportrichtung TR und ein Aufrollen der Streumaterialauflage 4 auf der zweiten Aufrolleinrichtung 7 anwendbar und umgekehrt. Die zweite Aufrolleinrichtung 7 kann also, insbesondere bei umgekehrter Definition der Transportrichtung TR, die gleiche Funktionalität aufweisen wie die erste Aufrolleinrichtung 6.

### Bezugszeichenliste

- 1: Vorrichtung zum Aufbringen von Streumaterial
- 2: Stallboden
- 4: Streumaterialauflage
- 6: erste Aufrolleinrichtung
- 6.1: Umlenkeinrichtung
- 7: zweite Aufrolleinrichtung
- 8: Abfördereinrichtung
- 9: Feststoffauflagefläche
- 10: Saugvorrichtung
- 10.1: Saugtrichter
- 10.2: Vakuumerzeuger
- 12: Trennwand
- 13: Verfahreinrichtung
- 16: Aufbringungseinrichtung
- 20: Positionsermittlungseinrichtung
- 30: erster Antrieb
- 31: zweiter Antrieb
- 32: dritter Antrieb
- 33: Zugseil
- AB: Abförderbreite
- AR: Abförderrichtung
- FS: Feststoff
- H1, H2: Bedeckungshöhe
- SB: Streumaterialauflagenbreite
- SM: Streumaterial
- TG: Transportgeschwindigkeit
- TR: Transportrichtung

## Patentansprüche

1. Vorrichtung (1) zum Aufbringen von Streumaterial (SM) bei der Tierhaltung, wobei die Vorrichtung (1) zumindest aufweist:
- eine auf einem Stallboden (2) anordenbare Streumaterialauflage (4);
- zumindest einen Antrieb (30, 31), wobei die Streumaterialauflage (4) mittels des zumindest einen Antriebs (30, 31) mit einer Transportgeschwindigkeit (TG) im Wesentlichen parallel zum Stallboden (2) entlang einer Transportrichtung (TR) bewegbar ist;
- eine erste Aufrolleinrichtung (6), wobei die Streumaterialauflage (4) bei einer Bewegung der Streumaterialauflage (4) in Transportrichtung (TR) auf der ersten Aufrolleinrichtung (6) aufrollbar ist und die Streumaterialauflage (4) bei einer Bewegung der Streumaterialauflage (4) entgegen der Transportrichtung (TR) von der ersten Aufrolleinrichtung (6) abrollbar ist;
- eine Aufbringungseinrichtung (16), welche dazu ausgebildet ist, Streumaterial (SM) mit einer variablen Mengenleistung auf die Streumaterialauflage (4) aufzubringen;
wobei die Transportgeschwindigkeit (TG) der Streumaterialauflage (4) und die Mengenleistung der Aufbringungseinrichtung (16) unabhängig voneinander einstellbar sind,
**dadurch gekennzeichnet, dass** eine Saugvorrichtung (10) vorgesehen ist, wobei mittels eines durch die Saugvorrichtung (10) erzeugbaren Luftsogs ein Anteil an Streumaterial (SM) von auf der Streumaterialauflage (4) angeordneten Feststoffen (FS) und/oder von der Streumaterialauflage (4) abgefallenen Feststoffen (FS) abtrennbar ist.

2. Vorrichtung (1) nach Anspruch 1, **dadurch gekennzeichnet, dass** eine zweite Aufrolleinrichtung (7) vorgesehen ist, wobei die Streumaterialauflage (4) bei einer Bewegung der Streumaterialauflage (4) entgegen der Transportrichtung (TR) auf der zweiten Aufrolleinrichtung (7) aufrollbar ist und die Streumaterialauflage (4) bei einer Bewegung der Streumaterialauflage (4) in Transportrichtung (TR) von der zweiten Aufrolleinrichtung (7) abrollbar ist.

3. Vorrichtung (1) nach Anspruch 1, **dadurch gekennzeichnet, dass** eine zweite Aufrolleinrichtung (7) vorgesehen ist, wobei bei einer Bewegung der Streumaterialauflage (4) entgegen der Transportrichtung (TR) ein die zweite Aufrolleinrichtung (7) mit einem Ende der Streumaterialauflage (4) verbindendes Verbindungsmittel auf der zweiten Aufrolleinrichtung (7) aufrollbar ist und bei einer Bewegung der Streumaterialauflage (4) in Transportrichtung (TR) das die zweite Aufrolleinrichtung (7) mit dem Ende der Streumaterialauflage (4) verbindende Verbindungsmittel von der zweiten Aufrolleinrichtung (7) abrollbar ist.

4. Vorrichtung (1) nach einem der Ansprüche 1 bis 3, **dadurch gekennzeichnet, dass** zumindest eine sich im Wesentlichen senkrecht zum Stallboden (2) erstreckende Trennwand (12) vorgesehen ist, wobei die zumindest eine Trennwand (12) mittels einer Verfahreinrichtung (13) im Wesentlichen senkrecht zum Stallboden (2) bewegbar ist.

5. Vorrichtung (1) nach einem der vorhergehenden Ansprüche, **dadurch gekennzeichnet, dass** eine Positionsermittlungseinrichtung (20) zur Ermittlung einer Position der Streumaterialauflage (4) in Transportrichtung (TR) relativ zum Stallboden (2) vorgesehen ist.

6. Vorrichtung (1) nach einem der vorhergehenden Ansprüche, **dadurch gekennzeichnet, dass** die Intensität des durch die Saugvorrichtung (10) erzeugbaren Luftsogs einstellbar ist, insbesondere abhängig von der Beschaffenheit des Streumaterials (SM) und/oder der Beschaffenheit der Feststoffe (FS) und/oder von der Position der Streumaterialauflage (4) einstellbar ist.

7. Verfahren zum Aufbringen von Streumaterial (SM) bei der Tierhaltung unter Verwendung einer Vorrichtung (1) nach einem der Ansprüche 1 bis 6, wobei das Verfahren zumindest die folgenden Schritte aufweist:
a) Einstellen der Transportgeschwindigkeit (TG) der Streumaterialauflage (4);
b) Einstellen der Mengenleistung der Aufbringungseinrichtung (16);
c) Bewegen der Streumaterialauflage (4) mittels des zumindest einen Antriebs (30, 31) entlang der Transportrichtung (TR);
d) Aufbringen von Streumaterial (SM) auf die Streumaterialauflage (4) mittels der Aufbringungseinrichtung (16) während der Bewegung der Streumaterialauflage (4);
wobei das Einstellen der Transportgeschwindigkeit (TG) der Streumaterialauflage (4) in Schritt a) und das Einstellen der Mengenleistung der Aufbringungseinrichtung (16) in Schritt b) derart unabhängig voneinander vorgenommen wird, dass Streumaterial (SM) in einer vorbestimmten Bedeckungshöhe (H) auf die Streumaterialauflage (4) aufgebracht wird.

8. Verfahren nach Anspruch 7, **dadurch gekennzeichnet, dass** in Schritt c) zusätzlich ein Abrollen der Streumaterialauflage (4) mittels der ersten oder einer zweiten Aufrolleinrichtung (6, 7) erfolgt.

9. Verfahren nach Anspruch 7 oder 8, **dadurch gekennzeichnet, dass** zumindest eine Trennwand (12) vorgesehen ist, wobei die zumindest eine Trennwand (12) vor einem Bewegen der Streumaterialauflage (4) vom Stallboden (2) wegbewegt wird und nach einem Bewegen der Streumaterialauflage (4) zum Stallboden (2) hinbewegt wird.

10. Verfahren nach Anspruch 9, **dadurch gekennzeichnet, dass** die zumindest eine Trennwand (12) vor und/oder nach dem Bewegen der Streumaterialauflage (4) derart oberhalb der Streumaterialauflage (4) angeordnet wird, dass unter einer Unterseite der Trennwand (12) kein Spalt ausgebildet ist.

11. Verfahren nach einem der Ansprüche 7 bis 10, **dadurch gekennzeichnet, dass** zumindest eine Positionsermittlungseinrichtung (20) vorgesehen ist und das Einstellen der Bedeckungshöhe (H) der Streumaterialauflage (4) abhängig von der durch die Positionsermittlungseinrichtung (20) ermittelten Position der Streumaterialauflage (4) in Transportrichtung (TR) relativ zum Stallboden (2) erfolgt.

12. Verfahren nach Anspruch 11, **dadurch gekennzeichnet, dass** mehrere sich im Wesentlichen senkrecht zum Stallboden (2) erstreckende Trennwände (12) vorgesehen sind, wobei in jedem Abschnitt der Streumaterialauflage (4), der sich nach dem Bewegen in Schritt c) zwischen zueinander benachbarten Trennwänden (12) befindet, durch die Aufbringungseinrichtung (16) Streumaterial (SM) in einer für jeden Abschnitt individuell vorbestimmten Bedeckungshöhe (H) aufgebracht wird.

13. Verfahren nach einem der Ansprüche 11 oder 12, **dadurch gekennzeichnet, dass** mehrere sich im Wesentlichen senkrecht zum Stallboden (2) erstreckende Trennwände (12) vorgesehen sind, wobei in den Abschnitten der Streumaterialauflage (4), die sich nach dem Bewegen in Schritt c) unterhalb der Trennwände (12) befinden, durch die Aufbringungseinrichtung (16) kein Streumaterial (SM) aufgebracht wird.

## Claims

1. Device (1) for applying litter material (SM) in animal husbandry, wherein the device (1) comprises at least:
- a litter material support (4) that can be arranged on a stable floor (2);
- at least one drive (30, 31), wherein the litter material support (4) can be moved by means of the at least one drive (30, 31) at a transport speed (TG) substantially parallel to the stable floor (2) along a transport direction (TR);
- a first winding device (6), wherein the litter material support (4) can be rolled up on the first winding device (6) when the litter material support (4) is moved in the transport direction (TR) and the litter material support (4) can be unrolled from the first winding device (6) when the litter material support (4) is moved in the opposite direction to the transport direction (TR);
- an application device (16) which is designed to apply litter material (SM) to the litter material support (4) at a variable quantity output;
wherein the transport speed (TG) of the litter material support (4) and the quantity output of the application device (16) can be adjusted independently of one another, **characterized in that** a suction device (10) is provided, wherein a portion of litter material (SM) from solids (FS) arranged on the litter material support (4) and/or from solids (FS) fallen from the litter material support (4) can be separated by means of an air suction generated by the suction device (10).

2. Device (1) according to claim 1, **characterized in that** a second winding device (7) is provided, whereby the litter material support (4) can be wound onto the second winding device (7) when the litter material support (4) is moved against the transport direction (TR) and the litter material support (4) can be unrolled from the second winding device (7) when the litter material support (4) is moved in the transport direction (TR).

3. Device (1) according to claim 1, **characterized in that** a second winding device (7) is provided, whereby when the litter material support (4) moves in the opposite direction to the transport direction (TR), a connecting means connecting the second winding device (7) to one end of the litter material support (4) can be rolled up on the second winding device (7) and, when the litter material support (4) moves in the transport direction (TR), the connecting means connecting the second winding device (7) to the end of the litter material support (4) can be unrolled from the second winding device (7).

4. Device (1) according to one of claims 1 to 3, **characterized in that** at least one partition wall (12) extending substantially perpendicular to the stable floor (2) is provided, wherein the at least one partition wall (12) can be moved substantially perpendicular to the stable floor (2) by means of a traversing device (13).

5. Device (1) according to one of the preceding claims, **characterized in that** a position determination device (20) is provided for determining a position of the litter material support (4) in the transport direction (TR) relative to the stable floor (2).

6. Device (1) according to one of the preceding claims, **characterized in that** the intensity of the air suction that can be generated by the suction device (10) is adjustable, in particular depending on the nature of the litter material (SM) and/or the nature of the solids (FS) and/or the position of the litter material support (4).

7. Method for applying litter material (SM) in animal husbandry using a device (1) according to one of claims 1 to 6, wherein the method comprises at least the following steps:
a) adjusting the transport speed (TG) of the litter material support (4);
b) adjusting the quantity output of the application device (16);
c) moving the litter material support (4) along the transport direction (TR) by means of the at least one drive (30, 31);
d) applying litter material (SM) to the litter material support (4) by means of the application device (16) during the movement of the litter material support (4);
wherein the adjustment of the transport speed (TG) of the litter material support (4) in step a) and the adjustment of the quantity output of the application device (16) in step b) are carried out independently of each other in such a way that litter material (SM) is applied to the litter material support (4) at a predetermined coverage height (H).

8. Method according to claim 7, **characterized in that** in step c) the litter material support (4) is additionally unrolled by means of the first or a second rolling device (6, 7).

9. Method according to claim 7 or 8, **characterized in that** at least one partition wall (12) is provided, wherein the at least one partition wall (12) is moved away from the stable floor (2) before the litter material support (4) is moved and is moved toward the stable floor (2) after the litter material support (4) is moved.

10. Method according to claim 9, **characterized in that** the at least one partition wall (12) is arranged above the litter material support (4) before and/or after the litter material support (4) is moved in such a way that no gap is formed under an underside of the partition wall (12).

11. Method according to one of claims 7 to 10, **characterized in that** at least one position determination device (20) is provided and the setting of the coverage height (H) of the litter material support (4) is carried out depending on the position of the litter material support (4) determined by the position determination device (20) in the transport direction (TR) relative to the stable floor (2).

12. Method according to claim 11, **characterized in that** a plurality of partition walls (12) extending substantially perpendicular to the stable floor (2) are provided, wherein in each section of the litter material support (4) which is located between adjacent partition walls (12) after moving in step c), litter material (SM) is applied by the application device (16) at a coverage height (H) predetermined individually for each section.

13. Method according to one of claims 11 or 12, **characterized in that** a plurality of partition walls (12) extending substantially perpendicular to the stable floor (2) are provided, wherein in the sections of the litter material support (4) which are located below the partition walls (12) after moving in step c), no litter material (SM) is applied by the application device (16).

## Revendications

1. Dispositif (1) pour épandre un matériau de litière (SM) dans l'élevage d'animaux, le dispositif (1) comprenant au moins:
- un support de matériau de litière (4) pouvant être disposé sur un sol d'étable (2);
- au moins un entraînement (30, 31), dans lequel le support de matériau de litière (4) peut être déplacé au moyen dudit au moins un entraînement (30, 31) à une vitesse de transport (TG) sensiblement parallèlement au sol d'étable (2) le long d'une direction de transport (TR);
- un premier dispositif d'enroulement (6), dans lequel le support de matériau de litière (4) peut être enroulé sur le premier dispositif d'enroulement (6) lors d'un déplacement du support de matériau de litière (4) dans la direction de transport (TR) et le support de matériau de litière (4) peut être déroulé du premier dispositif d'enroulement (6) lors d'un déplacement du support de matériau de litière (4) dans le sens opposé à la direction de transport (TR);
- un dispositif d'application (16) qui est conçu pour appliquer le matériau de litière (SM) avec un débit variable sur le support de matériau de litière (4);
dans lequel la vitesse de transport (TG) du support de matériau de litière (4) et le débit du dispositif d'application (16) pouvant être réglés indépendamment l'un de l'autre, **caractérisé en ce qu'**un dispositif d'aspiration (10) est prévu, dans lequel une partie du matériau de litière (SM) peut être séparée des matières solides (FS) disposées sur le support de matériau de litière (4) et/ou des matières solides (FS) tombées du support de matériau de litière (4) au moyen d'une aspiration d'air générable par le dispositif d'aspiration (10).

2. Dispositif (1) selon la revendication 1, **caractérisé en ce qu'**un deuxième dispositif d'enroulement (7) est prévu, dans lequel le support de matériau de litière (4) peut être enroulée sur le deuxième dispositif d'enroulement (7) lors d'un mouvement du support de matériau de litière (4) dans le sens opposé à la direction de transport (TR) et le support de matériau de litière (4) peut être déroulée du deuxième dispositif d'enroulement (7) lors d'un mouvement du support de matériau de litière (4) dans la direction de transport (TR).

3. Dispositif (1) selon la revendication 1, **caractérisé en ce qu'**un deuxième dispositif d'enroulement (7) est prévu, dans lequel lors d'un mouvement du support de matériau de litière (4) dans le sens opposé à la direction de transport (TR) un moyen de liaison reliant le deuxième dispositif d'enroulement (7) à une extrémité du support de matériau de litière (4) peut être enroulé sur le deuxième dispositif d'enroulement (7) et lors d'un mouvement du support de matériau de litière (4) dans la direction de transport (TR), le moyen de liaison reliant le deuxième dispositif d'enroulement (7) à l'extrémité du support de matériau de litière (4) peut être déroulé du deuxième dispositif d'enroulement (7).

4. Dispositif (1) selon l'une des revendications 1 à 3, **caractérisé en ce qu'**au moins une cloison (12) s'étendant essentiellement perpendiculairement au sol d'étable (2) est prévue, la au moins une cloison (12) pouvant être déplacée essentiellement perpendiculairement au sol d'étable (2) au moyen d'un dispositif de déplacement (13).

5. Dispositif (1) selon l'une des revendications précédentes, **caractérisé en ce qu'**un dispositif de détermination de position (20) est prévu pour déterminer une position du support de matériau de litière (4) dans la direction de transport (TR) par rapport au sol d'étable (2).

6. Dispositif (1) selon l'une des revendications précédentes, **caractérisé en ce que** l'intensité de l'aspiration d'air pouvant être générée par le dispositif d'aspiration (10) est réglable, en particulier en fonction de la nature du matériau de litière (SM) et/ou de la nature des matières solides (FS) et/ou de la position du support de matériau de litière (4).

7. Procédé pour épandre un matériau de litière (SM) dans l'élevage d'animaux à l'aide d'un dispositif (1) selon l'une des revendications 1 à 6, le procédé comprenant au moins les étapes suivantes:
a) réglage de la vitesse de transport (TG) du support de matériau de litière (4);
b) réglage du débit du dispositif d'application (16);
c) déplacement du support de matériau de litière (4) au moyen d'au moins un entraînement (30, 31) le long de la direction de transport (TR);
d) application du matériau de litière (SM) sur le support de matériau de litière (4) à l'aide du dispositif d'application (16) pendant le déplacement du support de matériau de litière (4);
dans lequel le réglage de la vitesse de transport (TG) du support de matériau de litière (4) à l'étape a) et le réglage du débit du dispositif d'application (16) à l'étape b) sont effectués indépendamment l'un de l'autre de telle sorte que le matériau de litière (SM) soit épandu sur le support de matériau de litière (4) à une hauteur de recouvrement prédéterminée (H).

8. Procédé selon la revendication 7, **caractérisé en ce que**, à l'étape c), supplémentaire un déroulement du support de matériau de litière (4) est effectué à l'aide du premier ou d'un deuxième dispositif d'enroulement (6, 7).

9. Procédé selon la revendication 7 ou 8, **caractérisé en ce qu'**au moins une cloison (12) est prévue, ladite au moins une cloison (12) étant éloignée du sol d'étable (2) avant le déplacement du support de matériau de litière (4) et rapprochée du sol détable (2) après le déplacement du support de matériau de litière (4).

10. Procédé selon la revendication 9, **caractérisé en ce que** la au moins une cloison (12) est disposée au-dessus du support de matériau de litière (4) avant et/ou après le déplacement du support de matériau de litière (4) de telle sorte qu'aucun interstice ne se forme sous une face inférieure de la cloison (12).

11. Procédé selon l'une des revendications 7 à 10, **caractérisé en ce qu'**au moins un dispositif de détermination de position (20) est prévu et que le réglage de la hauteur de recouvrement (H) du support de matériau de litière (4) s'effectue en fonction de la position du support de matériau de litière (4) déterminée par le dispositif de détermination de position (20) dans la direction de transport (TR) par rapport au sol d'étable (2).

12. Procédé selon la revendication 11, **caractérisé en ce que** plusieurs cloisons (12) s'étendant essentiellement perpendiculairement au sol d'étable (2) sont prévues, dans chaque section du support de matériau de litière (4) qui se trouve entre des cloisons (12) adjacentes après le déplacement de l'étape c), le matériau de litière (SM) est appliqué par le dispositif d'application (16) à une hauteur de recouvrement (H) prédéterminée individuellement pour chaque section.

13. Procédé selon l'une des revendications 11 ou 12, **caractérisé en ce que** plusieurs cloisons (12) s'étendant essentiellement perpendiculairement au sol d'étable (2) sont prévues, dans lequel aucun matériau de litière (SM) n'est appliqué par le dispositif d'application (16) dans les sections du support de matériau de litière (4) qui se trouvent sous les cloisons (12) après le déplacement de l'étape c),.
